# EUROPEAN PATENT APPLICATION

(11) **EP 2 549 418 A1**
(43) Date of publication of application: **23.01.2013**
(21) Application number: 12177237.0
(22) Date of filing: 20.07.2012
(51) Int. Cl.: G06Q 10/08

(54) **Product anti-counterfeit system**

(30) Priority: 22.07.2011 TW 100126082
(71) Applicant: M-Media Co., Ltd., Taipei City 106 (TW)
(72) Inventor: Chen, Gi Gi, 106 Taipei city (TW)
(74) Representative: Baldwin, Mark

(57) **Abstract**

A product anti-counterfeit system (20) for full-range product (27,28,29) monitoring management is disclosed. The system comprises a product managing device (24) and at least one status control device (261, 263, 265). Each product (27,28,29) has a product serial number (271, 281, 291) and is provided with a corresponding RFID tag (273, 283, 293) . When product status changes, the status control device is used to read the internal code from the RFID tag, to read or input product serial number (271, 281, 291) and input the new product status for establishing a product pedigree. By using the status control device to read the internal code from the RFID tag (273, 283, 293) and to check the product serial number and product pedigree, the authenticity of the product (27,28,29) and the legality of the source can be determined.

## Description

### BACKGROUND OF THE INVENTION

The present invention is related to anti-counterfeit technology and more particularly, to a product anti-counterfeit system, which allows full-range product monitoring management.

In recent years, RFID (Radio Frequency Identification) technology has been improved continuously, and the scope of RFID application has also been expanded continuously.

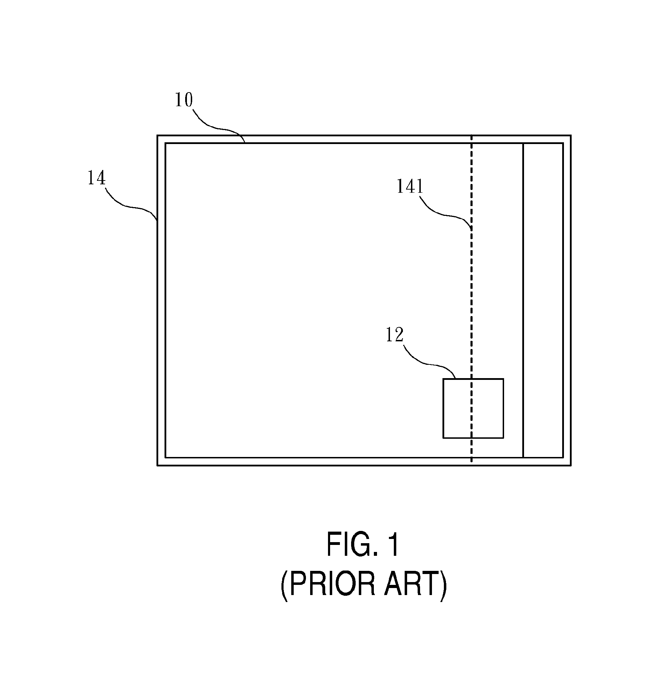

Product management is an important application field of RFID technology. Fig. 1 illustrates an application of RFID technology in product management according to the prior art. According to this application, an RFID tag 12 is attached to the surface of a product **10** or its packaging **14.** When the product **10** is purchased by a consumer, the product **10** is carried to the counter and scanned by an RFID tag reader (not shown), the RFID tag reader fetches product data for quick checkout.

After checkout, the RFID tag reader is controlled to transmit a signal to remove the anti-theft code from the RFID tag **12.** Thus, the product **10** can pass the sensing of the sensor at the exit, allowing the consumer to carry the product out of the shop, hypermarket or the like.

If any product that is not checked out is carried through the exit, the sensor at the exit will sense the anti-theft code of the RFID tag **12** and give an alarm to alert staff to a possible theft.

This product management system provides a quick and smooth check out process for products **10** and provides the product **10** with an anti-theft function. However, the product data is stored in the RFID tag **12** and can be read without direct contact with the RFID tag reader. An unauthorised person using a suitable model of RFID tag reader can illegally steal the product data of the product purchased by a consumer. This causes infringement of the consumer's personal privacy and may even threaten personal safety.

To overcome the abovementioned problem, some manufacturers may adhere the RFID tag **12** to the tearing line **141** on the product packaging **14.** Thus, when the user uses the product **10** or opens the packaging 14 of the product 10, the RFID tag **12** is damaged to prevent the product data stored in the RFID tag **12** from being read by others. However, since the RFID tag **12** is damaged, the product **10** can no longer be identified and managed, and the anti-counterfeit function of is lost. If the consumer is going to offer the product **10** for resale, he (she) may be unable to provide an effective certificate of authenticity.

### SUMMARY OF THE INVENTION

It is an object of the present invention to provide a product anti-counterfeit system which allows full-range monitoring management or at least provides an alternative to existing systems.

It is another object of the present invention to provide a product anti-counterfeit system, which utilizes a product managing device and at least one status control device to manage and record product status and to form a product pedigree, achieving effective product management and recognition of product authenticity.

It is still another object of the present invention to provide a product anti-counterfeit system, wherein each product has one respective product serial number and is attached with an RFID tag storing an internal code. By matching the product serial number and the internal code recognition of the product is achieved.

It is still another object of the present invention to provide a product anti-counterfeit system, wherein the product managing device comprises a product database for recording every status of each product for establishing a complete product pedigree for members to check.

It is still another object of the present invention to provide a product anti-counterfeit system, wherein the product managing device comprises a member database for storing member accounts and data, which can be combined with the product database to provide more powerful product control.

It is still another object of the present invention to provide a product anti-counterfeit system, wherein a member account is established when a user provides a user ID.

It is still another object of the present invention to provide a product anti-counterfeit system, wherein the user ID is selectively one of a national identity number, a passport number, a telephone number, a mobile phone number, an e-mail address, a business registration number, a user defined account, a specific account, or the combination thereof.

It is still another object of the present invention to provide a product anti-counterfeit system, wherein a password is sent to the purchaser by means of one of a short message, e-mail, post, printing, voice and the combination thereof selectively, by the product managing device after the member account is created.

The present invention provides a product anti-counterfeit system, comprising: a plurality of products, each of said product having a product serial number; a plurality of RFID tags respectively corresponding to said products, each of said RFID tag having a respective internal code stored therein; a product managing device comprising a product database for storing the product serial number of each said product, the internal code of each said RFD tag corresponding to said product, and the related product information; and at least one status control device connected to said product managing device, each of said status control device comprising an RFID tag reader for reading the internal code stored in each RFID tag, reading or inputting the product serial number, inputting a new product status, and creating a corresponding product status data in said product database of said product managing device to form a product pedigree when the status of each said product is changed; wherein each of said status control device can be used to read the internal code of each of said RFID tag corresponding to said product for checking the internal code and product serial number for recognition of product authenticity.

### BRIEF DESCRIPTION OF THE DRAWINGS

- Fig. 1: is a schematic drawing illustrating product management with an RFID according to the prior art.
- Fig. 2: is a schematic diagram showing a product anti-counterfeit system in accordance with one embodiment of the present invention.
- Fig. 3: is a schematic drawing illustrating an example of product configuration in accordance with one embodiment of the present invention.
- Fig. 4: is a schematic drawing illustrating an example of product configuration in accordance with another embodiment of the present invention.

### DETAILED DESCRIPTION OF THE PREFERRED EMBODIMENTS

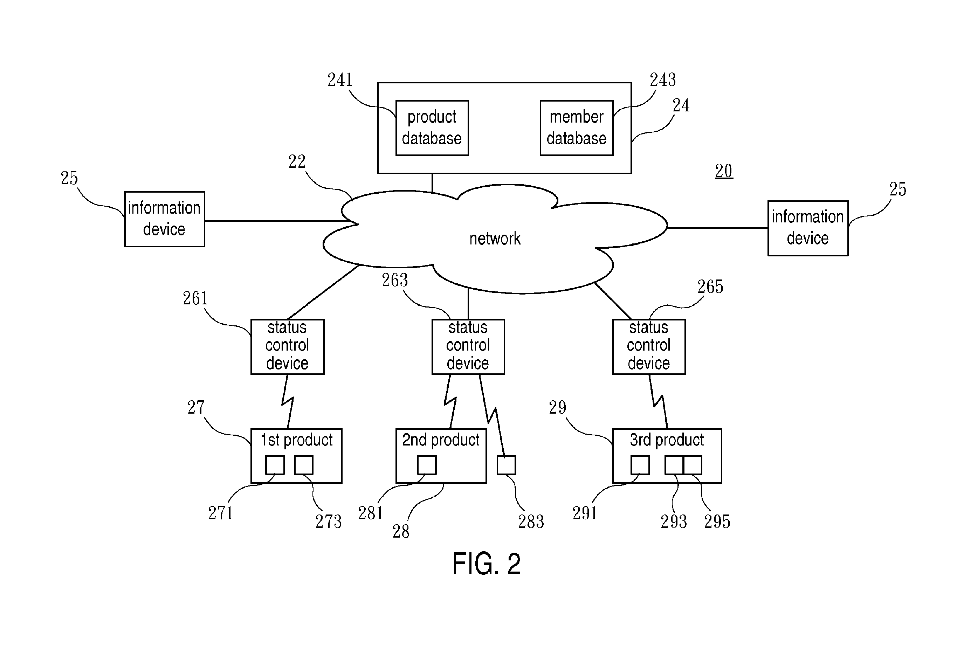

Referring to Fig. 2, there is shown a product anti-counterfeit system **20** in accordance with one embodiment of the present invention. The product anti-counterfeit system 20 comprises a product managing device **24** and at least one status control device, for example **261, 263** and **265.** Each product (for example, first product **27,** second product **28** and third product **29)** has a respective product serial number **271, 281** or **291,** and is equipped with a corresponding RFID tag **273, 283** and **293.**

The status control devices **261, 263** and **265** are respectively connected to the product managing device **24.** The product managing device **24** is configured to maintain a product database **241** for storing the product serial numbers **271, 281** and **291** of the products **27, 29** and **29,** the internal codes of the corresponding RFID tags **273, 283** and **293** and the related product data.

The status control devices **261, 263** and **265** each comprise an RFID tag reader (not shown) for reading the internal codes stored in the RFID tags **273, 283** and **293.** The status control devices **261, 263** and **265** can also read or input the serial number and product status of each product.

When the status of the product **27, 28** or **29** changes, for example, produced, stocked or delivered, for exhibition, reaching distributor or store, sold or resold, etc, the status control device **261, 263** or **265** is operated to read in the internal code of the respective RFID tag **273, 283** or **293,** and to input the new status. Consequently, a corresponding product status data is stored the product database **241** of the product managing device **24.** The product status data contains the product's name, model, serial number, internal code, status (such as produced, stocked, delivered, exhibition, distributor, store, sold and resold), time and place.

According to the embodiment, every product has a complete product pedigree with product status data of every stage. Thus, if the authenticity of the product is doubted at any stage, one can carry the product and the associated RFID tag to a site where a status control device **261, 263** or **265** is provided and use the status control device to read the internal code stored in the RFID tag and retrieve the product serial number stored in the product database **241.** If the product serial number on the product matches the product serial number retrieved from the product database **241,** the product is proved to be genuine, authentic or legally sourced.

After recognition of the authenticity of the product, the status of the product can also be checked with the product pedigree recorded in the product database **241** to determine whether the source of the product is legal or not.

In one embodiment of the present invention, the product managing device **24** is also configured to maintain a member database **243** for storing member accounts and data. Membership can be obtained in two ways: one is by means of purchasing a product and the other is by means of an application for membership.

In the embodiment, when a consumer purchases a product, the status control device **261, 263** or **265** is used to read the product serial number of the product and the internal code stored in the RFID tag for status update, and the product status data is recorded in the product database **241** of the product managing device **24.** At this time, the purchaser can provide a user ID, such as a national identity number, a passport number, a telephone number, a mobile phone number, an e-mail address, a business registration number, a user defined account, a specific account or a combination thereof. After the user ID is input, a member account is established in the member database **243** of the product managing device **24** for recording the corresponding member data, a relation between the product data and the member account is established, and the member account is recorded in the product status data.

When a new member account is created in the product managing device **24,** the password of the member account is sent to the purchaser by means of one of an SMS message, e-mail, post, printing, voice or a combination thereof. The purchaser can log into the product managing device **24** by inputting his/her user ID and the corresponding password to permit account management, data enquiry or accessing other membership services. Further, if the purchaser is going to re-sell the product, the purchaser can go to a place where the status control device **261, 263** or **265** is provided to register the resale status, and the resale purchaser can provide a user ID to create a member account and become a member.

In one embodiment of the present invention, the RFID tag **273, 283** or **293** may be kept separately (like a guarantee card), adhered to the surface of the product, or combined with the product according to different product management requirements.

In one embodiment of the present invention, every status control device **261, 263** or **265** may be connected to the product managing device **24** by a network, and every member can use an information device **25** to connect to the network for logging into the product managing device **24.** The information device 25 may, for example, be a computer, mobile phone, smart phone, notebook, tablet personal computer, iPad®, personal digital assistant or the like.

In one embodiment of the present invention, the product serial number of every product can be selectively represented by one of a character code, a barcode, a pattern or a combination thereof.

In one embodiment of the present invention, every product (for example, product **29)** can be equipped with an integrity recognition tag **295** which can be adhered to the seal of the package, the position for opening or the position for using of the product. The integrity recognition tag **295** will be damaged when the product is unsealed, opened or used. If the status control device **265** cannot read the integrity recognition tag **295,** it means the product has been unsealed, opened or used and has lost its integrity.

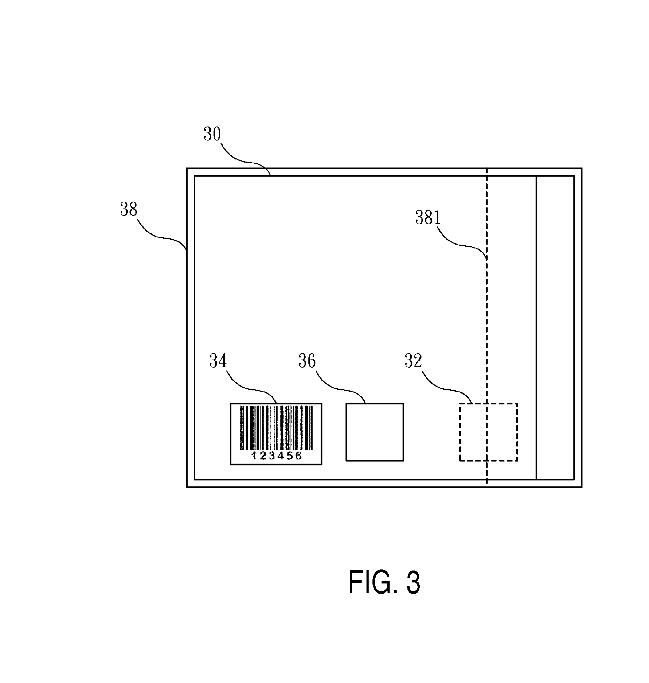

Fig. 3 illustrates an example of product configuration in accordance with one embodiment of the present invention. As illustrated, the product **30** comprises a product serial number **34** and an RFID tag **36.** The product serial number **34** is affixed to the product **30.** The RFID tag **36** can be independently kept, adhered to the surface of the product, or combined with the product.

If there is a need for determination of the integrity of the product, an integrity recognition tag **32** can be adhered to the seal (such as the tearing line **381),** position for opening or position for using of the product. When unsealing, opening or using the product **30,** the integrity recognition tag **32** will be damaged. Thus, by detecting whether the integrity recognition tag **32** is readable or not, the integrity of the product **30** can be determined. Certainly, the integrity recognition tag **32** should match the record in the product database.

Furthermore, even if the product **30** is unsealed, opened or used, the authenticity of the product can be determined by reference to the product serial number **34** and the internal code in the RFID tag **36.** According to the product pedigree recorded in the product database of the product managing device, the legality of the source of the product **30** can also be determined.

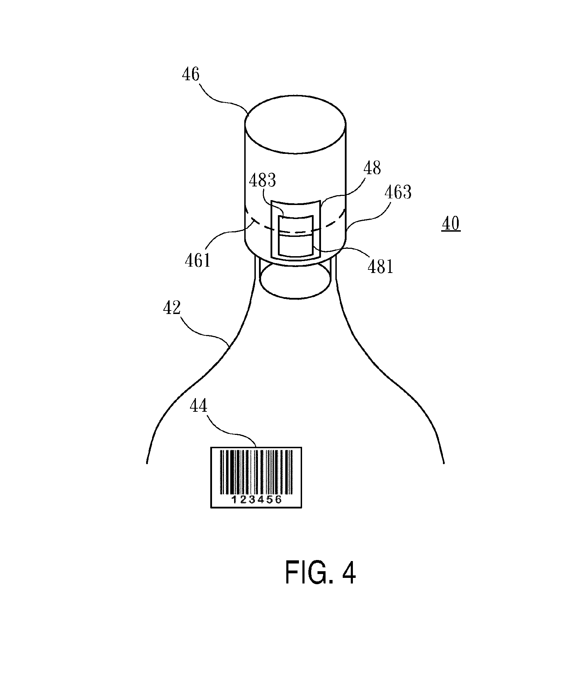

Fig. 4 illustrates an example of product configuration in accordance with another embodiment of the present invention. As illustrated, the product **40** is carried in a container **42** and sealed with a sealing cap (or sealing bottle cork) **46.** The product **40** can be a bottled beverage, cosmetics, wine or perfume. According to this application, an integrity recognition tag can be integrated into the RFID tag **48.**

In this product **40** that is sealed with the sealing cap **46,** the container **42** is marked with the product serial number **44,** and the RFID tag **48** is adhered to the sealing cap **46.** The RFID tag **48** comprises an internal code circuit **481** that has stored therein an internal code, and an integrity recognition circuit **483** that is adhered to the tearing line **461** of the sealing cap **46.**

When opening the product **40,** the sealing cap **46** is torn off at the tearing line **461** and then removed from the container **42.** At this time, the integrity recognition circuit **483** of the RFID tag **48** is broken, and the internal code circuit **481** is maintained with the cuff **463** at the container **42.** Thus, when a status control device is used to read the RFID tag **48** after opening of the product **40,** the internal code can be accessed for recognition of the authenticity of the product **40.** Because the integrity recognition circuit **483** is damaged and no integrity recognition signal can be found, the product is recognised as having lost its integrity.

Using the product anti-counterfeit system **20** can effectively recognise product authenticity as well as product integrity. Even if the product has been used and become a second-hand product, the system can still effectively recognise the authenticity of the product and trace the legality of the source of the product, which can assist in stopping the selling of counterfeits and illegal trade.

## Claims

1. A product anti-counterfeit system, comprising:
a plurality of products (27-29), each of said products having a product serial number (271, 281, 291);
respective RFID tags (273, 283, 293) associated with said products, each of said RFID tags having a respective internal code stored therein;
a product managing device (24) configured to maintain a product database (241) for storing the product serial number of each said product, the internal code of the said RFID tag associated with the product and related product information; and
a status control device (261, 263, 265) connected with said product managing device, said status control device comprising an RFID tag reader for reading the internal code stored in each RFID tag and being configured for reading or inputting the product serial number and product status data into said product database (241) to form a product pedigree;
wherein said status control device (261, 263, 265) can be used to read the internal code of said RFID tags for checking the internal code and product serial number to determine the authenticity of the associated product.

2. A product anti-counterfeit system as claimed in Claim 1, wherein the product status is selectively one of produced, stocked, delivered, exhibition, distributor, store, sold or re-sold.

3. A product anti-counterfeit system as claimed in Claim 1, wherein said product managing device (24) is configured to maintain a member database (243) for storing a plurality of member accounts and member data.

4. A product anti-counterfeit system as claimed in Claim 3, wherein said status control device is configured for inputting a user ID of a purchaser when the product status is sold or re-soldl so that said product managing device (24) can store said user ID in said product status data of the product database and create a member account and member data corresponding to the purchaser in said member database.

5. A product anti-counterfeit system as claimed in Claim 4, wherein said user ID is selectively one of a national identity number, a passport number, a telephone number, a mobile phone number, an e-mail address, a business registration number, a user defined account, a specific account or a combination thereof.

6. A product anti-counterfeit system as claimed in Claim 4 or 5, wherein said product managing device (24) is configured to send a password for the member account to the purchaser by means of one of an SMS message, e-mail, post, printing, voice, or a combination thereof when a new member account is created.

7. A product anti-counterfeit system as claimed in any one of the preceding Claims, wherein said product managing device (24) is configured to be able to access the product status of each said product by reference to the RFID tag associated with the product or the product serial number received from said status control device.

8. A product anti-counterfeit system as claimed in any one of the preceding Claims, wherein said product managing device (24) is connected with said status control device (261, 263, 265) through a network (22).

9. A product anti-counterfeit system as claimed in Claim 8 when dependent on Claim 3, wherein said product managing device is configured to permit each member to log into said product managing device through said network (22) for accessing the product status of a product.

10. A product anti-counterfeit system as claimed in any one of the preceding Claims, wherein said product serial number can be selectively represented by one of a character code, a barcode, a pattern or a combination thereof.

11. A product anti-counterfeit system as claimed in any one of the preceding Claims, wherein each said RFID tag (273, 283, 293) is selectively to be kept separately, adhered to a surface of the product or combined with the product.

12. A product anti-counterfeit system as claimed in any one of the preceding Claims, further comprising a plurality of integrity recognition tags (295; 483) respectively associated with said products, wherein each said integrity recognition tag can be adhered to a seal of packaging for, a position for opening, or a position for using the respective product.

13. A product anti-counterfeit system as claimed in Claim 12, wherein each said integrity recognition tag (483) can be integrated in the RFID tag of the associated product.
